# EUROPEAN PATENT APPLICATION

(11) **EP 2 184 911 A1**
(43) Date of publication of application: **12.05.2010**
(21) Application number: 08466029.9
(22) Date of filing: 10.11.2008
(51) Int. Cl.: H04N 1/00, H04N 1/32, H04L 29/06, H04L 9/32, G06F 21/00

(54) **Method and apparatus for authenticating documents produced by reprographic devices using digital signatures**

(71) Applicant: Y Soft, s.r.o., 130 00 Praha 3 (CZ)
(72) Inventor: Krajicek, Ondrej, 69154 Týnec (CZ); DeMartini Uddin, Martin, 39002 Tábor (CZ)
(74) Representative: Havlík, Michal

(57) **Abstract**

Method and apparatus for authenticating documents, produced by reprographic device, such as a scanner, using digital signatures. The nature of the proposed invention is to authenticate (i.e. establish trusted identity of the document origins) a scanned document in the scanner device and preserve its integrity regardless of the conditions, handling and the environment where the document exists or existed or the data storage, where the document is stored. By authenticating a document in the scanner device, a trusted path from a source device, i.e. the scanner, which produced the document upon user request (the owner) and any recipient of the document is formed. All parties involved in handling the document may place a trust on the document source, verify its origin and make a qualified decision whether to trust the document contents.

## Description

The invention provides method and apparatus for establishing trusted identification (authentication) of a user who produced an electronic document (such as by means of scanning hard-copy images) on a Scanner (20), providing non-repudiation and protection of the document integrity by means of digital signature and optional encryption.

### Current state of the art

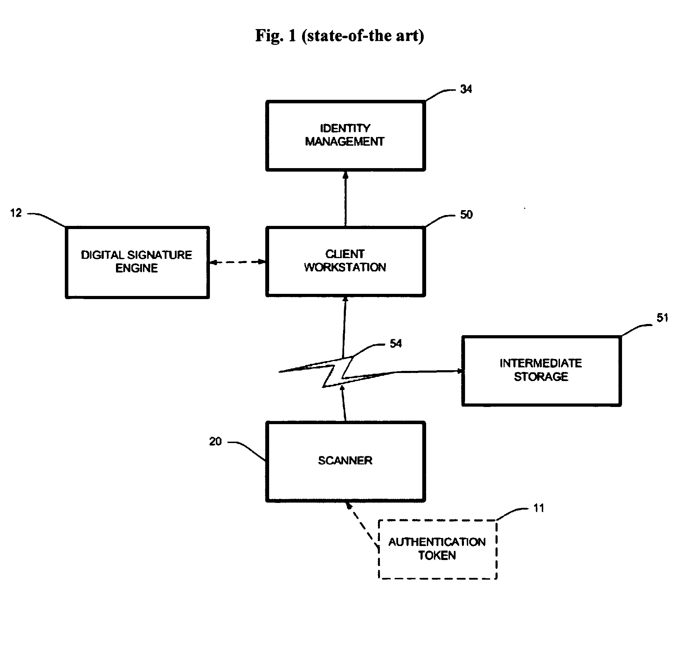

At the time of writing, solutions for producing electronic documents and especially transforming hard-copy documents into an electronic form are quite common. Reprographic devices, i.e. Devices with scanning functionality - denoted as Scanner (20) throughout this document - are common among electronic equipment in various, especially office environments. If security is of particular concern, additional measures are being applied, such as access restrictions to the Scanners or encryption and digital signatures of electronic documents produced by users using the Scanners. The current approach as shown in Fig. 1 usually consists of the following components:
**(a)** The user workstation (50) that comes from a population of workstations existing in the environment used for receiving the produced electronic documents (typically in PDF, TIFF, JPEG or other common used electronic document formats).
**(b)** The Network infrastructure (54) (which comprises network interconnection between the scanner (20) and client workstations (50) and may incorporate additional peers involved in handling and transferring electronic documents produced by the scanner (20), such as FTP servers, file servers, mail transport agents (MTA), etc.) which are used to hand over the produced electronic document from the scanner (20) to the workstation (50) of the recipient of the produced electronic document.
**(c)** A Device with scanning functionality, the scanner (20) to produce electronic documents upon user request or as a result of any user activity. The scanner (20) is attached to a common network infrastructure (54) or using any other common type of electronic connection to the user workstation (50), such as USB or IEE 1394 interface.
**(d)** Authentication token (11) presented by the user to the scanner (20) to perform authentication and receive permission to use the scanner (20) and establish identity to designate the producer of any electronic documents. Usage of authentication token (11) or the authentication and authorisation steps are purely optional.
**(e)** Digital Signature Engine (12) which the user may use to encrypt and digitally sign electronic documents produced at the scanner (20) to confirm the validity and integrity of the document contents, to mark himself as the user who produced the documents and to make the document confidential. Digital Signature Engine (12) is either hardware or software component, such as a smart card, USB security token or Trusted Platform Module (TPM) embedded in the client workstation (50).
**(f)** The intermediate document storage (51), such as a document management system (DMS) or digital archive which serves as a primary destination for temporarily or finally storing electronic documents produced at any scanner (20).

The current state of the art, as described above, enables convenient transformation of hard-copy documents into their electronic form, the delivery of the produced electronic documents to their designated recipients or delivering the documents to any document storage for archiving or further processing. However, the origin of the document is not authenticated and the document contents is not protected or the protection is made upon reception of the document and cannot be enforced in the system. We would like to name just a few examples of the problems found in the currently known approaches:
**(a)** Any form of security protection of the document, such as digital signature or encryption is put to the documents only in addition and only after the document has been delivered to the client workstation (50) or document storage (51). In this case, there is no trusted identity established and it is easy to forge the identity of the user who produced the document.
**(b)** Moreover, as there is no guarantee of the author of the produced electronic document, and many of the existing document management systems, electronic document storages or archiving systems do not require secured connection for document input, it is also easy to forge or modify part of the electronic document itself.
**(c)** Since the encryption or a digital signature of the produced electronic document requires user action, the security of the current approaches is not mandatory or enforceable, but discretionary or optional. Such approaches cannot be deployed in environments with increased demand for security.
**(d)** Systems, known to the art, which realize document authentication and encryption, are based on usage of personal computers which receive of the electronic documents. This results in a technically complex and difficult to maintain solution. The overall TCO (Total Cost of Ownership) of these systems make them unacceptable for most customer environments.

In many practical applications it would be useful to have a small single purpose device which can be easily and at low deployment and maintenance costs incorporated with the scanner (20) to create encapsulated unit for producing digitally signed electronic documents. Since the device would be designed specifically for the defined purpose, the automation of the process would be possible, greatly increasing convenience of the system for the end users.

### The presented invention

The subject of the invention is to extend the existing systems with the apparatus providing additional security measures and to increase the convenience of the system, especially:
**(a)** To maintain identity of the user who scanned a particular document during the process of scanning and submitting the document to the network infrastructure (54) for further processing and to bind this identity to the scanned document and make it verifiable.
**(b)** To provide confidentiality of the scanned documents by means of encryption and provide mechanism to make the document readable only to the intended recipients.
**(c)** To enable integration of scanning solutions and devices with the rest of the customer infrastructure in a secure way and support customer security policy.
**(d)** To automate the entire process of digitally signing the scanned documents, by eliminating the majority of the steps previously performed manually by the user and by enhancing the capabilities of the scanners by utilizing specifically designed authentication terminals (21).
**(e)** To ensure integrity of the scanned document and authentication of its origin in systems for automatic processing of electronic documents (such as document management systems (DMS), electronic document storages, electronic document archives or digital archives) by establishing a trusted path from the Device (200) to the designated recipient or destination.
**(f)** To build easy to use and efficient system for scanning and securing documents avoiding the usual compromise between convenience and security in computer applications.

The presented invention method is based on authenticating electronic documents by establishing verifiable identity of a user producing electronic documents by operating a scanner (20) and comprises:
**(a)** authentication of the user to the scanner (20),
**(b)** establishment of a trusted path leading from the scanner (20) to the network infrastructure (54), the trusted path is established by leveraging the authentication terminal (21),
**(c)** receiving or retrieving produced electronic documents from the scanner (20),
**(d)** generation of a digital signature of the received electronic documents by the authentication terminal (21) leveraging a digital signature engine (12) on behalf of the authenticated user which is mandatory and undeniable by the user,
**(e)** a delivery of the digitally signed electronic documents to the intended destination or intended recipient, where the identity of the user who generated the electronic document may be verified by validating the digital signature.
**(f)** authentication of the document by generating the digital signature is mandatory and undeniable by the authenticated user,
**(g)** the automation of the entire process of authenticating electronic documents by means of digital signatures, consisting of actions (a) - (e), so that the user does not need to explicitly trigger any of the defined actions and the destinations of delivery may vary greatly - ranging from e-mail, filesystem folder to any 3^{rd} party system capable of storing electronic documents,
**(h)** the isolation of the entire process of authenticating electronic documents from the network infrastructure (54) so that the generated electronic documents do not enter the network infrastructure (54) without digital signature.

The invented apparatus realizing the invented method comprises:
**(a)** a scanner (20) and an authentication terminal (21), physically and/or technically combined into a single device (200),
**(b)** the authentication terminal (21) being a small, single purpose device designed for security and convenience of usage,
**(c)** the interface for user authentication which may be provided by the authentication terminal (21) or by the scanner (20) itself,
**(d)** a digital signature engine (12) for generating digital signatures realized either as part of the authentication token (11) or included as a capability in the authentication terminal (21).

The presented invention relies on common techniques for authentication, such as using login/password pair, personal identification numbers (PINs), personal identification badges or ID cards (such as contact chip card, contactless or proximity cards, magnetic stripe cards, RFID chips), and all other reliable mechanisms known to the art.

The invention relies on common techniques for authorisation and access control, such as role based access control in combination with capabilities or access control lists or other applicable techniques known to the art.

The invention builds on existing approaches for producing electronic documents by Scanners and delivering such electronic documents to their intended recipients.

The invention relies on techniques known to the art to establish trust between individual components where such trust is needed to maintain the security of the whole infrastructure. The invention also relies on techniques know to the art to maintain data confidentiality and data integrity of the data exchanged between individual components of the whole infrastructure.
**(a)** Example of such techniques is the SSLv3 (Secure Sockets Layer protocol, version 3) /TLS (Transport Layer Security protocol). The mutual authentication is based on X.509 certificates and the "chain-of-trust" model with commonly trusted authority (or authorities).

Realization of the presented method may take advantage of existing digital signature and identification technologies. Digital certificates based on the X.509 or PKCS#12 standards may be used as a user identity. For verifying the identity, the "chain-of-trust" model may be used.
For more convenient management of digital certificates, the apparatus may be connected to the identity management server (34), which provides universal access to user digital certificates and also provides information about trust relationships.

The convenience of the invented method and apparatus may be greatly enhanced by incorporating the digital signatures into the generated electronic documents in conformance with their internal formats, if they provide digital signature and/or encryption support. If this is possible, the validation of the digital signature is then performed by standard tools and the user does not need to take any additional steps to validate the digital signature and verify the identity of the document.

Security of the invented method and apparatus may be also enhanced by introducing data confidentiality by using encryption of the electronic documents. By using the digital signature engine (12) it is possible to encrypt the generated electronic document. The user who generated the electronic document may optionally specify identities of other users, who should be able to decrypt the document.

The invented apparatus may be extended by a user interface at the scanner (20), provided either by the scanner (20) or by the authentication terminal (21) which enables the user to select intended recipients or destinations of the electronic documents. If a more complex logic needs to be applied in the process of delivering the digitally signed electronic document, additional component may be introduced to the apparatus, the dispatching server (33), which may apply a more complex decision and delivery rules unavailable to the Scanner (20).

The invented apparatus may be specifically tailored for compatibility with wide range of authentication tokens (11). It may present USB port for connecting USB tokens (authentication tokens with USB interface), contact smart card reader for reading smart cards or contact-less smart card reader for reading contact-less smart cards. Alternatively, the authentication token (11) may only have a form of knowledge, such as username and password. To gather such credentials, user interface may be provided by the authentication terminal (21) or the scanner (20).

The invented apparatus may be deployed as a secure scan-to-email or scan-to-folder solution. The electronic documents scanned by the user on a scanner (20) are digitally signed using an Authentication Token (11) at the Authentication Terminal (21). Since authentication terminal (21) is attached or incorporated in the Device (200) the digital signature is created as part of the electronic document production process and the document enters the environment with verifiable identity. The Device (200) presents a physical/technical combination of the original Scanner (20) with the authentication terminal (21) to provide a single unit with enhanced security capabilities. The authentication terminal (21) is a small, single purpose device, which provides feature enhancement only within scope of the invention and does not impose additional requirements in terms of maintenance. The cost of such device is significantly lower in comparison to full-scale computer systems which are nowadays used by the users to digitally sign received documents. Combining the Scanner (20) with such a small device is the most efficient way how to create a Device (200) capable of document authentication by means of digital signatures.

The invented apparatus may be also deployed as a reliable way of delivering scanned documents from a Device to the designated recipient (such as workstation (50) of the creator of the scanned document). The invented apparatus ensures confidentiality of the scanned documents by means of data encryption using common cryptographic techniques know to the art such as utilizing symmetric and/or asymmetric cryptography and public/private key pair.

The invention will now be described in more detail with reference to the drawings, in which
Fig. 1 is a schema of the solution according to the state of art;
Fig. 2 shows a first variant of the invention, below referred to as **"DS-on-server";** and
Fig. 3 shows a second variant of the invention, below referred to as **"DS-on-terminal".**

### Apparatus of the presented invention

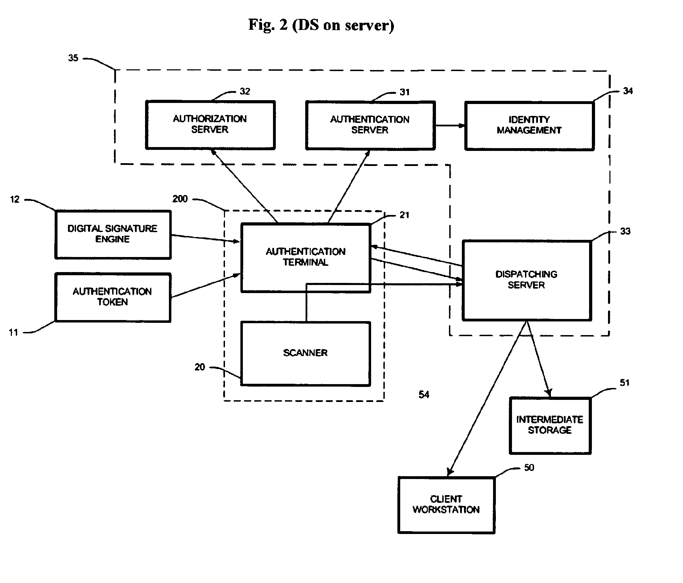

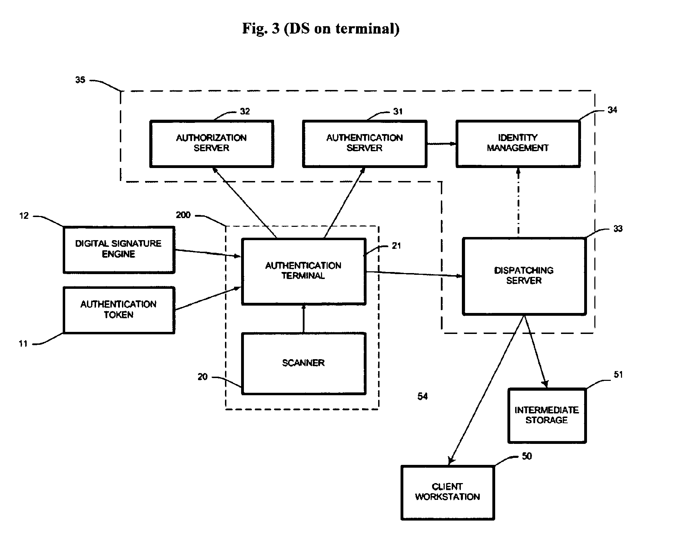

The invented apparatus providing features as mentioned above comprises of:
**(a)** A Device (200) that combines a Scanner (20) to produce electronic documents upon user request or as a result of any user activity and Authentication Terminal (21), internally realized, in combination, by utilizing processor, operating memory, bus interface, data storage memory, communication interfaces - such as network interface, user interface, scanner (2) vender interface and proprietary interfaces for communication with Digital Signature Engine (12) - and software equipment providing all necessary operations and incorporated into a small compact single purpose device designed specifically for user authentication and security operations that provides hardware and optionally a user interface for authenticating the User and communicating with the Digital Signature Engine (12). An example of such a scanner (20) is the networked office scanner, multi-function device equipped with scanning unit, a computer printer producing job tickets or more generally any device capable of producing electronic documents as a result of user activity. The scanner (20) is attached to the Authentication Terminal (21), as in Fig. 3 using network interface or any other common interface known to the art (such as by means of serial or parallel communication bus) or to a common network (as in Fig. 2). Authentication Terminal (21) is either attached to a common network infrastructure (54) or there is a dedicated direct connection between the authentication terminal (21) and the dispatching server (33) providing a connection point for the entire Device (200).
**(b)** The Digital Signature Engine (12) which is hardware device or a software program capable of generating a digital signature of data presented to the device/program. Examples of Digital Signature Engine (12) known to the art are: smart cards, USB tokens with digital signature support, Trusted Platform Modules, software implementation of digital signature algorithms in the form of Security Support Providers, etc.
**(c)** An Authentication Token (11) which stands for a hardware device as credentials presented by a user to the authentication terminal (21) to establish and verify identity of the user such as contact chip card, contactless or proximity card, magnetic stripe card, barcode, fingerprints or biometrics, RFID chips or any other authentication device know to the art.
**(d)** Usage of the Authentication Token (11) is optional as it can be compensated by providing the identification of the user to the Device (200) by entering credentials such as the personal identification number (PIN), login/password pair or any other common techniques for authentication known to the art.
**(e)** The Security Policy (35) which defines requirements and handling conditions for electronic documents produced by the scanner (20). The Security Policy also covers requirements for user authentication, authorization and credentials; requirements and properties of the physical connection of the individual components of the infrastructure; a mechanism to establish trust of the user identity and the digitally signed contents; minimal requirements for security in communication channels.
**(f)** Authentication server (31), which is a hardware device or a software program, governed by the Security Policy (35) provides identification and credential validation services, such as validating a login and password pair, validating an authentication token (11) identification and PIN number pair, or validating an authentication token (11) acting as a digital signature engine (12) using appropriate mechanism. The operation techniques of the authentication server (31) are well known to the art.
**(g)** Authorization server (32), which is a hardware device or a software program, governed by the Security Policy (35) provides authorization services, especially computing a set of capabilities and permissions for the user and granting/denying access requests to resources based on the user permission set. The operation techniques of the authorisation server (32) is well known to the art.
**(h)** Identity Management Server (34), which is a hardware device or a software program, governed by the Security Policy (35) provides information about user identity associated with authentication tokens (11) and also manages information necessary to establish trust in the digitally signed documents by providing information necessary to validate digital signatures in electronic documents.
The Dispatching server (33) governed by the security policy (35) receives documents produced by the devices (200). The dispatching server (33) may perform additional steps, such as computing document digests and merging detached digital signatures with the signed documents. The Dispatching server (33) also transfers the document to the designated recipient or location as specified by the user at the device, such as Intermediate storage (51) by means of document management systems (DMS), electronic document storages, electronic document archives, digital archives or any other system or client workstation (50) using email client, network folder sharing or any other way known to the art.

### Methods of the presented invention

The presented invention provides two similar method variants for digital signatures and encryption of the scanned documents, denoted for the purpose of this description as **"DS-on-server"** and **"DS-on-terminal"**. The major difference between the two methods is in technical complexity of implementation, the DS-on-terminal method requires more complex and resource consuming implementation of the software part of the authentication terminal (21).

For the first defined variant of the invented apparatus (DS-on-server) the scanner (20) is preconfigured to submit selected generated documents to the dispatching server (33) over a secure channel. This method requires that a secure connection between the scanner (20) and the dispatching server (33) exists or can be established on demand. The level of the provided security depends on the device configuration. The security is provided only for documents delivered by the device to the dispatching server (33).

The sequence of user actions defined by the DS-on-server variant is as follows:
**(a)** The user approaches the scanner (20) equipped with the authentication terminal (21). The user authenticates at the terminal (21) by providing credentials, such as an authentication token (11). The terminal (21) communicates with the authentication server (32) to validate the provided credentials.
**(b)** If the user is successfully authenticated, the apparatus performs authorization of the user. The authorization is generally provided by an authorization server (31).
**(c)** Based on the result of authentication and authorization a session relationship is established between the user and the scanner (20) (the user-scanner session) and the user and the authentication terminal (21) (the user-terminal session). The implementation of the sessions depends on the capabilities of scanner devices, but in the most basic situation (no explicit support from the scanner(20)), it is possible to establish both sessions using timestamps. The established sessions are time-bounded; the apparatus recognizes the beginning and the end of the session.
**(d)** When the device generates an electronic document, it submits it to the dispatching server (33) over a secured channel. The required level of security is data confidentiality and server authentication to the client. When sending the electronic document to the dispatching server (33), the device may optionally supply identity information taken from the session established in the previous step.
**(e)** When the dispatching server (33) receives an electronic document from the scanner (20), the dispatching server (33) recognizes the identity of the user from the user-scanner session applicable to the received electronic document.
**(f)** The dispatching server (33) analyses the received documents and computes a digest from the document (or from the selected portions of the document). Computation of the document digest takes into account the internal structure of the document based on their digital format (such as PDF, TIFF, etc.). Certain digital formats require specialized processing of the contents, selecting only a portion of the documents for digital signing.
**(g)** The dispatching server (33) connects to the authentication terminal (21) using a secure channel and sends the digest computed for the digital signature in the previous step.
**(h)** The authentication terminal (21) interacts with the user and the digital signature engine (12) to digitally sign the digest received from the dispatching server (33). If the access to the digital signature engine (12) is provided by the user, the authentication terminal (21) asks the user to provide it. The user may have provided access to the digital signature engine (12) earlier, such as in step [b] as the digital signature engine (12) can be a part of the authentication token (11).
**(i)** The authentication terminal (21) sends the digital signature of the digest back to the dispatching server (33).
**(j)** The dispatching server (33) creates a digitally signed electronic document from the original document and the digital signature and destroys the original document.
**(k)** The digitally signed electronic document may then be processed in the same manner as any scanned document.

For the second method of the invented apparatus (DS-on-terminal) The scanner (20) is preconfigured to submit selected generated documents to the authentication terminal (21) over a secure channel. This method requires a secure connection between the scanner (20) and an authentication terminal (21). The scanner (20) and authentication terminal (21) may be physically and/or technically combined into a single device.
**(a)** The user approaches the scanner (20) equipped with the authentication terminal (21). The user authenticates at the terminal (21) by providing credentials, such as an authentication token (11). The terminal (21) communicates with the authentication server (32) to validate the provided credentials.
**(b)** If the user is successfully authenticated, the apparatus performs authorization of the user. The authorization is generally provided by an authorization server (31).
**(c)** Based on the result of authentication and authorization a session relationship is established between the user and the scanner (20) (the user-scanner session) and the user and the authentication terminal (21) (the user-terminal session). The implementation of the sessions depends on the capabilities of scanner devices, but in the most basic situation (no explicit support from the scanner(20) ), it is possible to establish both session using timestamps or using logical clocks (e.g. Lamport Clocks). The established sessions are time-bounded, the apparatus recognizes the beginning and the end of the session.
**(d)** When the scanner (20) generates an electronic document, it submits it to the authentication terminal (21) over a secured channel. When sending the electronic document to the dispatching server (33), the device may optionally supply identity information taken from the session established in the previous step.
**(e)** The authentication terminal (21) analyses the received data and computes a digest from the data (or from the selected portions of the document). Computation of the document digest takes into account the internal structure of the document based on their digital format (such as PDF, TIFF, etc.). Certain digital formats require specialized processing of the contents, selecting only a portion of the documents for digital signing. Generally, the electronic document is processed either in the store-and-forward model where the entire document must be received by the authentication terminal (21) prior to signing or in the cut-through model, where the document data are processed as they are received, in digest is computed progressively and the digital signature is appended to the data stream or send separately.
**(f)** The authentication terminal (21) interacts with the user and the digital signature engine (12) to digitally sign the digest received from the dispatching server (33). If the access to the digital signature engine (12) is provided by the user, the authentication terminal (21) asks the user to provide it. The user may have provided access to the digital signature engine (12) earlier, such as in step [b] as the digital signature engine (12) can be a part of the authentication token (11).
**(g)** The authentication terminal (21) either creates a digitally signed electronic document (store-and-forward model) or appends/sends the digital signature separately. The resulting electronic document is sent to the dispatching server (33) in all cases.
**(h)** The dispatching server (33) treats the digitally signed electronic document as any other submitted electronic document.

## Claims

1. A method of authentication of electronic documents by establishing verifiable identity of a user producing electronic documents by operating a scanner (20) - a reprographic device with scanning functionality, such as a multi-function printer - comprising:
a. authentication of the user to the scanner (20),
b. establishment of a trusted path leading from the scanner (20) to the network infrastructure (54) using the authentication terminal (21),
c. reception or retrieval of produced electronic documents from the scanner (20),
d. generation of a digital signature of the received electronic documents by the authentication terminal (21) leveraging a digital signature engine (12) on behalf of the authenticated user,
e. delivery of the digitally signed electronic documents to the intended destination or intended recipient, where the identity of the user who generated the electronic document is freely verifiable by validating the digital signature
**characterised in that**
f. authentication of the document by generating the digital signature is mandatory and undeniable by the authenticated user,
g. the entire process of generating authenticated electronic documents, consisting of actions **a - e,** is automated so that the user does not need to explicitly trigger any of the defined actions **a - e,**
h. the entire process of generating authenticated electronic documents is isolated from the network infrastructure (54) so that the generated electronic documents do not enter the network infrastructure (54) without digital signature.

2. A method of **claim 1**, where the intended recipient of the digitally signed electronic documents is defined as the user who is authenticated to the scanner (20).

3. A method **of claim 1 or 2, characterized in that**
a. the user identity used for generating digital signature is in form of a digital certificate based on the X.509 or PKCS#12 standard,
b. the verification of the user identity is based on the trust in the digital signature, which is established using the "chain-of-trust" model, with commonly trusted authority.

4. A method of any of **claims 1 to 3**, further comprising identity management service, which provides information about trust relationships between user identities and authorities, which is used to establish trust in the user identity.

5. A method of any of **claims 1 to 4**, where the digital signatures of electronic document are formed according to the definition of particular electronic document formats, such as for example PDF, to enable recognition of the digital signatures by applications in accordance with the definition.

6. A method of any of **claims 1 to 5**, further comprising encryption of produced electronic documents to establish data confidentiality between the device and intended recipients of the electronic documents by letting the user who produces the electronic document define identities of the intended recipients.

7. A method of **claim 6**, further comprising encryption of produced electronic documents by automatically substituting the identity of the user generating the documents as the identity of the intended recipient.

8. A method of any of **claims 1 to 7**, further comprising automated delivery of the produced electronic documents to the intended recipient(s) via electronic mail.

9. A method of any of **claims 1 to 8**, further comprising delivery of the produced electronic documents to a folder designated as the primary destination associated with the intended recipient(s).

10. A method of any of **claims 1 to 9**, wherein dispatching server (33), receives digitally signed electronic documents and re-transmits them to the intended recipient(s) or intended destinations, which are 3^{rd} party systems used for document processing and storage.

11. A method of **claim 10**, further comprising a user interface at the device for definition of the intended destination within the 3^{rd} party system for processing electronic documents.

12. An apparatus realizing method of **claim 1** comprising:
a. a scanner (20) for producing electronic documents,
b. an authentication terminal (21) connected to the scanner (20) and to the network infrastructure (54),
c. an interface for user authentication to the scanner (20),
d. a digital signature engine (12),
**characterised in that**
a. the authentication terminal (21) and the scanner (20) are technically and/or physically combined into a single device (200),
b. the authentication terminal (21) is a single purpose device for realizing the method of any of **claims 1 to 11** including, in combination, means for user authentication to the scanner (20), means for generating the digital signatures leveraging the digital signature engine (12), and optionally means for encryption.

13. An apparatus of **claim 12** where the interface for user authentication is realized by an interface for presenting authentication tokens (11), e.g. a USB interface for connecting USB tokens, a contact smart card reader or a contact-less smart card reader.

14. An apparatus of **claim 12** where the digital signature engine (12) is the integral part or the authentication terminal (21).

15. An apparatus of **claim 12** where the interface for user authentication is realized as a user interface for entering credentials.

16. An apparatus of **claim 13** where the digital signature engine (12) is realized by the authentication token (11).

17. An apparatus of **claim 16**, wherein the authentication token (11) is a contact or contact-less smart card capable of performing digital signature and encryption without publishing user private keys to the authentication terminals (21).
